# EUROPEAN PATENT APPLICATION

(11) **EP 4 746 487 A1**
(43) Date of publication of application: **20.05.2026**
(21) Application number: 24853547.8
(22) Date of filing: 29.07.2024
(51) Int. Cl.: H04W 16/28, H04W 36/32

(54) **COMMUNICATION METHOD AND APPARATUS**

(30) Priority: 11.08.2023 CN 202311018767
(71) Applicant: HUAWEI TECHNOLOGIES CO., LTD., Shenzhen 518129 (CN)
(72) Inventor: LIU, Liang, Shenzhen, Guangdong 518129 (CN); CHENG, Zhulin, Shenzhen, Guangdong 518129 (CN); LI, Dan, Shenzhen, Guangdong 518129 (CN); DENG, Chun, Shenzhen, Guangdong 518129 (CN)
(74) Representative: Pfenning, Meinig & Partner mbB
(86) International application number: PCT/CN2024/108228
(87) International publication number: WO 2025/036135

(57) **Abstract**

A communication method and apparatus relate to the field of communication technologies, and are provided to enable a terminal device to better access a network device, and improve communication quality between the terminal device and the network device. The method includes: A first network device adjusts a beam from a first beam to a second beam when a first preset condition is met; and after adjusting the beam to the second beam, adjusts the beam from the second beam to the first beam when a second preset condition is met. The first preset condition is that in a coverage area of the first network device, a quantity of terminal devices whose moving speeds are greater than or equal to a first preset threshold is greater than or equal to a second preset threshold. A beam type of the first beam is a narrow beam, and a beam type of the second beam is a wide beam. The second preset condition is that in the coverage area of the first network device, the quantity of terminal devices whose moving speeds are greater than or equal to the first preset threshold is less than the second preset threshold.

## Description

This application claims priority to Chinese Patent Application No. 202311018767.2, filed with the China National Intellectual Property Administration on August 11, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a terminal device may access a network device based on a synchronization signal/physical broadcast channel block (synchronization system/physical broadcast channel block, SS/PBCH block, or SSB for short) beam fixedly configured in the network device.

However, in a communication process of the terminal device, when a moving speed of the terminal device is high, because the high moving speed causes a fast change of a location, beam switching may be frequently performed. Consequently, a signal of the terminal device fluctuates greatly and is unstable, deteriorating communication quality.

Therefore, how to enable the terminal device to better access the network device and improve communication quality between the terminal device and the network device becomes a problem to be resolved urgently.

### SUMMARY

This application provides a communication method and apparatus, to enable a terminal device to better access a network device, and improve communication quality between the terminal device and the network device.

According to a first aspect, a communication method is provided. The method may be performed by a first network device, may be performed by a component of the first network device, for example, a processor, a chip, or a chip system of the first network device, or may be implemented by a logical module or software that can implement all or some functions of the first network device. The method includes: The first network device adjusts a beam from a first beam to a second beam when a first preset condition is met; and after adjusting the beam to the second beam, adjusts the beam from the second beam to the first beam when a second preset condition is met. The first preset condition is that in a coverage area of the first network device, a quantity of terminal devices whose moving speeds are greater than or equal to a first preset threshold is greater than or equal to a second preset threshold. A beam type of the first beam is a narrow beam, and a beam type of the second beam is a wide beam. The second preset condition is that in the coverage area of the first network device, the quantity of terminal devices whose moving speeds are greater than or equal to the first preset threshold is less than the second preset threshold.

Based on the first aspect, when the first preset condition is met, the first network device adjusts the beam from the narrow beam (that is, the first beam) to the wide beam (that is, the second beam), so that a terminal device whose moving speed is greater than or equal to the first preset threshold no longer frequently switches the beam when accessing the first network device. In this way, signal fluctuation of the terminal device is reduced, reliability of accessing the first network device by the terminal device is improved, and communication quality between the terminal device and the first network device is improved. When the second preset condition is met, in the coverage area of the first network device, there are a small quantity of terminal devices whose moving speeds are greater than or equal to the first preset threshold. The beam of the first network device may be adjusted from the wide beam (that is, the second beam) to the narrow beam (that is, the first beam), to expand the coverage area of the first network device, increase reference signal received power (reference signal received power, RSRP) in the coverage area of the first network device, and increase a quantity of terminal devices that access the first network device.

In a possible implementation, the first network device sends first indication information to a second network device when the first preset condition is met. The first indication information indicates the second network device to adjust the beam to the wide beam.

Based on this possible implementation, when the first preset condition is met, the first network device sends the first indication information to the second network device, so that the second network device can adjust the beam to the wide beam in advance. This avoids, as far as possible, a case in which communication quality deteriorates because the second network device does not adjust the beam to the wide beam in time due to a delay. In addition, in a coverage area of the second network device, a terminal device whose moving speed is greater than or equal to the first preset threshold no longer frequently switches the beam, so that signal fluctuation of the terminal device is reduced, and communication performance between the terminal device and the second network device is improved.

In a possible implementation, the first network device sends second indication information to the second network device. The second indication information indicates the second network device to adjust the beam to the narrow beam when a third preset condition is met. The third preset condition is that in the coverage area of the second network device, a quantity of terminal devices whose moving speeds are greater than or equal to the first preset threshold is less than the second preset threshold.

Based on this possible implementation, the first network device may indicate the second network device to adjust the wide beam to the narrow beam when the third preset condition is met, to expand the coverage area of the second network device, increase RSRP in the coverage area of the second network device, and increase a quantity of terminal devices that access the second network device.

In a possible implementation, the first network device determines an average modulation and coding scheme (modulation and coding scheme, MCS) order corresponding to one or more terminal devices that meet a fourth preset condition within preset time; and if the average MCS order is greater than a third preset threshold, sends first configuration information to the one or more terminal devices that meet the fourth preset condition; or if the average MCS order is less than or equal to the third preset threshold, sends second configuration information to the one or more terminal devices that meet the fourth preset condition. The fourth preset condition is that a moving speed in the coverage area of the first network device is greater than or equal to the first preset threshold. The first configuration information indicates a cyclic prefix-orthogonal frequency division multiplexing (cyclic prefix-orthogonal frequency division multiplexing, CP-OFDM) waveform. The second configuration information indicates a discrete Fourier transform-spread-orthogonal frequency division multiplexing (discrete Fourier transform-spread OFDM, DFT-S-OFDM) waveform.

Based on this possible implementation, the first network device may determine the average MCS order of the terminal device whose moving speed is greater than or equal to the first preset threshold within the preset time and that is in the coverage area of the first network device. When the average MCS order is greater than the third preset threshold, the terminal device may be indicated, by using the first configuration information, to perform data transmission in the CP-OFDM waveform, so that transmit power of the terminal device can be reduced, and power consumption can be reduced. When the MCS order is less than or equal to the third preset threshold, the terminal device may be indicated, by using the second configuration information, to perform data transmission in the DFT-S-OFDM waveform, so that transmit power of the terminal device can be increased, distortion can be avoided, and communication performance can be improved. In addition, the first configuration information or the second configuration information is sent to the terminal device to fixedly configure a waveform, so that frequent waveform reconfiguration for the terminal device can be avoided as far as possible. In this way, a risk of a call drop for the terminal device can be mitigated, the terminal device is enabled to obtain optimal performance, and communication quality between the terminal device and the first network device can be improved.

In a possible implementation, the first network device determines a moving speed of a terminal device in the coverage area of the first network device based on one or two of the following parameters: a Doppler shift or a global positioning system speed (global positioning system speed, GPS speed).

Based on this possible implementation, the first network device may determine the moving speed of the terminal device based on a parameter like a Doppler shift of a signal or a GPS speed sent by the terminal device to the first network device.

According to a second aspect, a communication method is provided. The method may be performed by a second network device, may be performed by a component of the second network device, for example, a processor, a chip, or a chip system of the second network device, or may be implemented by a logical module or software that can implement all or some functions of the second network device. The method includes: The second network device receives first indication information from a first network device; and adjusts a beam from a third beam to a fourth beam based on the first indication information. The first indication information is used by the second network device to adjust the beam to a wide beam. A beam type of the third beam is a narrow beam, and a beam type of the fourth beam is the wide beam.

Based on the second aspect, the second network device receives the first indication information from the first network device, and may adjust the beam from the narrow beam (that is, the third beam) to the wide beam (that is, the fourth beam) in advance. When entering coverage of the second network device, a terminal device may access the second network device via the wide beam of the second network device, to avoid a case in which a call drop of the terminal device occurs because the beam is not adjusted to the wide beam in time due to a delay. In addition, the second network device adjusts the beam from the narrow beam (the third beam) to the wide beam (the fourth beam), so that a terminal device whose moving speed is greater than or equal to a first preset threshold can no longer frequently switch the beam. In this way, signal fluctuation of the terminal device is reduced, reliability of accessing the second network device by the terminal device is improved, and communication quality between the terminal device and the second network device is improved.

In a possible implementation, the second network device receives second indication information from the first network device, and adjusts the beam from the fourth beam to the third beam based on the second indication information. The second indication information indicates the second network device to adjust the beam to the narrow beam when a third preset condition is met. The third preset condition is that in a coverage area of the second network device, a quantity of terminal devices whose moving speeds are greater than or equal to the first preset threshold is less than a second preset threshold.

Based on this possible implementation, the second network device may adjust the beam from the wide beam (that is, the fourth beam) to the narrow beam (that is, the third beam) based on the second indication information, to expand the coverage area of the second network device, increase RSRP in the coverage area of the second network device, and increase a quantity of terminal devices that access the second network device.

In a possible implementation, the second network device adjusts the beam from the fourth beam to the third beam when the third preset condition is met.

Based on this possible implementation, when the third preset condition is met, the second network device may adjust the beam from the wide beam (that is, the fourth beam) to the narrow beam (that is, the third beam), to expand the coverage area of the second network device, increase the RSRP in the coverage area of the second network device, and increase the quantity of terminal devices that access the second network device. In comparison with that the second network device adjusts the beam based on the second indication information from the first network device, the second network device may adjust the beam based on the third preset condition, to reduce transmission overheads, and avoid, as far as possible, a case in which the beam is always the wide beam because the second network device receives no second indication information, so that communication reliability can be improved.

In a possible implementation, the second network device adjusts the beam from the third beam to the fourth beam when a fifth preset condition is met. The fifth preset condition is that in the coverage area of the second network device, a quantity of terminal devices whose moving speeds are greater than or equal to the first preset threshold is greater than or equal to the second preset threshold.

Based on this possible implementation, when the fifth preset condition is met, the second network device adjusts the beam from the narrow beam (namely, the third beam) to the wide beam (namely, the fourth beam), so that the terminal device whose moving speed is greater than or equal to the first preset threshold may no longer frequently switch the beam, and signal fluctuation of the terminal device is reduced. In this way, reliability of accessing the second network device by the terminal device is improved, and communication quality between the terminal device and the second network device is improved. In comparison with adjusting the beam based on the first indication information, the second network device adjusts the beam based on the fifth preset condition, to reduce transmission overheads, and avoid, as far as possible, a case in which the beam is always the narrow beam because the second network device receives no first indication information, so that communication reliability can be improved.

In a possible implementation, the first network device determines a moving speed of a terminal device in the coverage area of the first network device based on one or two of the following parameters: a Doppler shift or a GPS speed.

Based on this possible implementation, the second network device may determine the moving speed of the terminal device based on a parameter like a Doppler shift of a signal or a GPS speed sent by the terminal device to the first network device.

According to a third aspect, a communication apparatus is provided, and is configured to implement the method in the first aspect. The communication apparatus may be the first network device in the first aspect, or an apparatus or a component, for example, a chip, included in the first network device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the first aspect and the possible implementations of the first aspect. The processing module may be configured to implement a processing function in any one of the first aspect and the possible implementations of the first aspect. For example, the processing module is configured by the first network device to adjust a beam from a first beam to a second beam when a first preset condition is met. The first preset condition is that in a coverage area of a first network device, a quantity of terminal devices whose moving speeds are greater than or equal to a first preset threshold is greater than or equal to a second preset threshold. A beam type of the first beam is a narrow beam, and a beam type of the second beam is a wide beam. The processing module is further configured to: after adjusting the beam to the second beam, adjust the beam from the second beam to the first beam when a second preset condition is met. The second preset condition is that in the coverage area of the first network device, the quantity of terminal devices whose moving speeds are greater than or equal to the first preset threshold is less than the second preset threshold.

Optionally, the transceiver module and the processing module of the communication apparatus in the third aspect may further perform corresponding functions in any one of the first aspect or the possible implementations of the first aspect. For details, refer to the detailed descriptions in the method examples. For beneficial effects that can be achieved, refer to the foregoing related content.

According to a fourth aspect, a communication apparatus is provided, and is configured to implement the method in the second aspect. The communication apparatus may be the second network device in the second aspect, or an apparatus or a component, for example, a chip, included in the second network device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible implementations, the communication apparatus may include a processing module and a transceiver module. The transceiver module may include a sending module and a receiving module that are respectively configured to implement a sending function and a receiving function in any one of the second aspect and the possible implementations of the second aspect. The processing module may be configured to implement a processing function in any one of the second aspect and the possible implementations of the second aspect. For example, the transceiver module is configured to receive first indication information from a first network device. The first indication information indicates a second network device to adjust a beam to a wide beam. The processing module is configured to adjust the beam from a third beam to a fourth beam based on the first indication information. A beam type of the third beam is a narrow beam, and a beam type of the fourth beam is the wide beam.

Optionally, the transceiver module and the processing module of the communication apparatus in the fourth aspect may further perform corresponding functions in any one of the second aspect or the possible implementations of the second aspect. For details, refer to the detailed descriptions in the method examples. For beneficial effects that can be achieved, refer to the foregoing related content.

According to a fifth aspect, a communication apparatus is provided, including at least one processor. The processor is configured to cause, by executing computer instructions stored in a memory or by using a logic circuit, the communication apparatus to perform the communication method according to any one of the foregoing aspects or the possible implementations of any one of the foregoing aspects. The communication apparatus may be the first network device in any one of the first aspect or the possible implementations of the first aspect, or an apparatus or a component, for example, a chip, included in the first network device. Alternatively, the communication apparatus may be the second network device in any one of the second aspect or the possible implementations of the second aspect, or an apparatus or a component, for example, a chip, included in the second network device.

In some possible implementations, the communication apparatus further includes a memory, configured to store computer instructions and/or a configuration file of the logic circuit. Optionally, the memory and the processor are integrated together, or the memory is independent of the processor.

According to a sixth aspect, a communication apparatus is provided, including a processor and a communication interface. The communication interface is configured to input and/or output a signal. The processor is configured to execute a computer program or instructions, to cause the communication apparatus to perform the method in any one of the foregoing aspects. The communication apparatus may be the first network device in any one of the first aspect or the possible implementations of the first aspect, or an apparatus or a component, for example, a chip, included in the first network device. Alternatively, the communication apparatus may be the second network device in any one of the second aspect or the possible implementations of the second aspect, or an apparatus or a component, for example, a chip, included in the second network device.

In some possible implementations, the communication interface is an interface circuit, and is configured to read and write computer instructions. For example, the interface circuit is configured to receive computer-executable instructions (where the computer-executable instructions are stored in a memory, and may be directly read from the memory, or may be read via another component), and transmit the computer-executable instructions to the processor.

In some possible implementations, the communication interface is configured to communicate with a module outside the communication apparatus.

In some possible implementations, the communication apparatus may be a chip or a chip system. When the apparatus is the chip system, the chip system may include a chip, or may include the chip and another discrete component.

According to a seventh aspect, a communication apparatus is provided, including a logic circuit and an interface circuit. The interface circuit is configured to input information and/or output information. The logic circuit is configured to perform the method in any one of the foregoing aspects, and perform processing and/or generate to-be-output information based on the input information. The communication apparatus may be the first network device in any one of the first aspect or the possible implementations of the first aspect, or an apparatus or a component, for example, a chip, included in the first network device. Alternatively, the communication apparatus may be the second network device in any one of the second aspect or the possible implementations of the second aspect, or an apparatus or a component, for example, a chip, included in the second network device.

According to an eighth aspect, a computer-readable storage medium is provided. The computer-readable storage medium stores a computer program or instructions; and when the computer program or the instructions are executed by a processor, the method in any one of the foregoing aspects is performed.

According to a ninth aspect, a computer program product is provided. When the computer program product is executed by a processor, the method in any one of the foregoing aspects is performed.

It may be understood that when the communication apparatus provided in any one of the third aspect to the seventh aspect is a chip, the foregoing sending action/function may be understood as outputting information, and the foregoing receiving action/function may be understood as inputting information.

For technical effects brought by any one of the third aspect to the ninth aspect, refer to the technical effects brought in any one of the first aspect or the possible implementations of the first aspect, or refer to the technical effects brought in any one of the second aspect or the possible implementations of the second aspect. Details are not described herein again.

According to a tenth aspect, a communication system is provided. The communication system includes the first network device in any one of the first aspect or the possible implementations of the first aspect, and the second network device in any one of the second aspect or the possible implementations of the second aspect.

### BRIEF DESCRIPTION OF DRAWINGS

FIG. 1 is a diagram of an SSB narrow beam according to this application;
FIG. 2 is a diagram of an SSB wide beam according to this application;
FIG. 3 is a diagram of a communication system according to this application;
FIG. 4 is a diagram of a structure of a communication apparatus according to this application;
FIG. 5 is a diagram of interaction in a communication method according to this application;
FIG. 6 is a diagram of a structure of a first network device according to this application;
FIG. 7 is a diagram of a structure of a second network device according to this application; and
FIG. 8 is a diagram of a structure of another communication apparatus according to this application.

### DESCRIPTION OF EMBODIMENTS

The following describes implementations of embodiments of this application in detail with reference to accompanying drawings in this specification.

In the descriptions of this application, unless otherwise specified, the character "/" indicates an "or" relationship of associated objects. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof refers to any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the terms "example" or "for example" is used to represent giving an example, an illustration, or descriptions. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that, an "embodiment" mentioned throughout this specification means that particular features, structures, or characteristics related to the embodiment are included in at least one embodiment of this application. Therefore, various embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts of embodiments, refer to each other. In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding of the technical solutions in embodiments of this application, the following first briefly describes technologies related to this application.

### (1) High-speed dedicated network (high-speed dedicated network, HSDN) and high-speed public network

The HSDN may be referred to as a dedicated network. The HSDN is deployed around a high-speed railway, and may be a cell that provides a service for a high-speed railway user (which may also be referred to as a terminal device with a high moving speed). The cell may be referred to as a high-speed cell.

The high-speed public network may be referred to as a public network, is deployed around the HSDN, and may be a cell that provides a service for a non-high-speed railway user.

It may be understood that there is no strict division between users served by the HSDN and the high-speed public network. The high-speed railway user may preferentially access the HSDN based on network planning, or may access the high-speed public network. Similarly, a non-high-speed railway user may preferentially access the high-speed public network based on network planning, or may access the HSDN.

### (2) Downlink coverage

The downlink coverage is one of important indicators of communication quality, and may be an area covered by a beam of a network device.

Optionally, a terminal device in the coverage area of the network device may access the network device via a beam of the network device.

### (3) Beam

A beam type may be a wide beam, a narrow beam, or another type of beam. This is not limited.

In the protocol, the word "beam" is not directly used to represent a beam, but a beam-related operation is implicitly described in another manner. The beam is generally corresponding to a resource, in other words, the resource may also be used to indicate or describe the beam.

### (4) Uplink coverage

Due to a large penetration loss of a high-speed train and limited transmit power of the terminal device, the uplink coverage is limited to some extent.

Optionally, the terminal device may select, based on communication quality and a communication requirement, whether to use a high-order MCS or a low-order MCS.

Optionally, the terminal device may perform data transmission based on a CP-OFDM waveform or a DFT-S-OFDM waveform.

When the MCS is the high-order MCS, the CP-OFDM waveform has good performance. Data transmission may be performed based on the CP-OFDM waveform by using non-consecutive time-frequency domain resources, but a peak-to-average power ratio (peak-to-average power ratio, PAPR, or peak-to-average ratio for short) is high.

When the MCS is the low-order MCS, the DFT-S-OFDM waveform has good performance and a high PAPR, and can improve communication quality, but needs to be sent in high transmit power.

For example, the network device may indicate, based on uplink channel quality of the terminal device, the terminal device to use a related waveform.

For example, when the uplink channel quality is good, the MCS of the terminal device is the low-order MCS, and the network device may indicate the terminal device to use the CP-OFDM waveform; or when the uplink channel quality is poor, the MCS of the terminal device is the high-order MCS, and the network device may indicate the terminal device to use the DFT-S-OFDM waveform.

It may be understood that the network device may indicate, based on the uplink channel quality, the terminal device to switch the waveform, and the terminal device may perform data transmission based on the switched waveform, to improve communication performance of the terminal device.

However, because a signal of the terminal device with a high moving speed fluctuates greatly and the signal changes quickly, the network device cannot accurately determine the uplink channel quality, and cannot properly indicate the terminal device to switch the waveform.

For example, the network device indicates, at a moment 1, the terminal device to use the DFT-S-OFDM waveform. At a moment 2, the uplink channel quality is good, and the terminal device is more suitable for using the CP-OFDM waveform. In this case, the network device may indicate, in a reconfiguration manner, the terminal device to use the CP-OFDM waveform. However, when there are a large quantity of terminal devices, the network device needs to reconfigure all the terminal devices, which may cause large overheads. In addition, reconfiguring all the terminal devices may increase a probability of call drops of some terminal devices, and reduce communication quality between the terminal device and the network device.

Based on the foregoing descriptions, the terminal device may access the network device based on an SSB narrow beam or an SSB wide beam fixedly configured by the network device, or the terminal device may perform data transmission based on a waveform indicated by the network device.

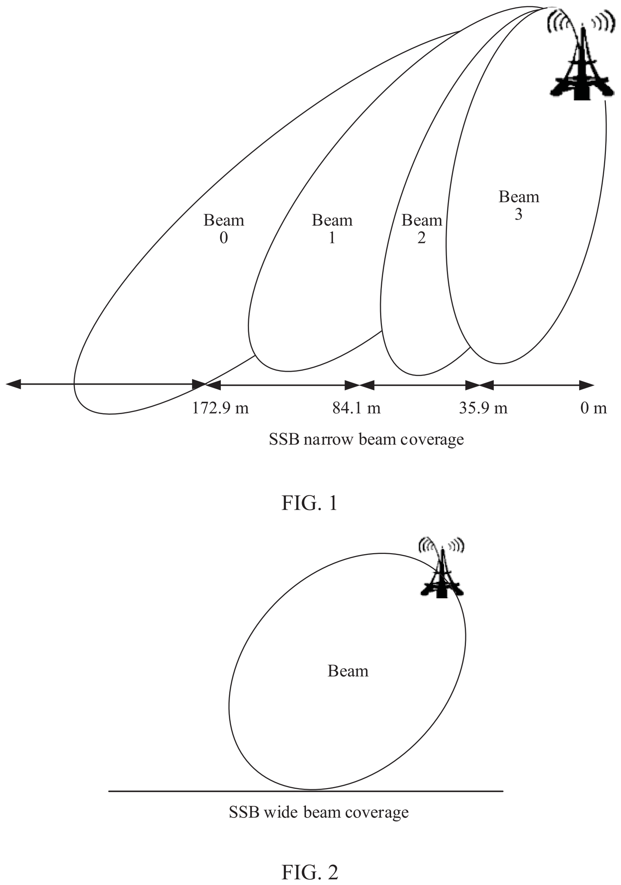

As shown in FIG. 1, an SSB narrow beam of a network device has a wide coverage area, and reference signal received power (reference signal received power, RSRP) is high. However, when a moving speed of a terminal device is high, the SSB narrow beam may not keep up with a location change of the terminal device. Frequent beam switching of the terminal device may cause large signal fluctuation of the terminal device. Consequently, communication reliability is reduced.

As shown in FIG. 2, an SSB wide beam can improve reliability of accessing a network device by a terminal device, and RSRP is low. However, cell coverage decreases, and a quantity of terminal devices accessing the network device decreases.

For example, in a cell in which the network device fixedly uses the SSB narrow beam, when entering the cell, the terminal device may access the network device based on the SSB narrow beam. When a moving speed of the terminal device is high, because the high moving speed causes a fast change of a location, beam switching may be frequently performed. Consequently, a signal of the terminal device fluctuates greatly and is unstable, and communication quality deteriorates.

Therefore, how to enable the terminal device to better access the network device and improve communication performance between the terminal device and the network device becomes a problem to be resolved urgently.

To resolve the foregoing technical problem, this application provides a communication method. The method includes: A first network device adjusts a beam from a first beam to a second beam when a first preset condition is met; and after adjusting the beam to the second beam, adjusts the beam from the second beam to the first beam when a second preset condition is met. The first preset condition is that in a coverage area of the first network device, a quantity of terminal devices whose moving speeds are greater than or equal to a first preset threshold is greater than or equal to a second preset threshold. A beam type of the first beam is a narrow beam, and a beam type of the second beam is a wide beam. The second preset condition is that in the coverage area of the first network device, the quantity of terminal devices whose moving speeds are greater than or equal to the first preset threshold is less than the second preset threshold.

In embodiments of this application, when the first preset condition is met, the first network device adjusts the beam from the narrow beam (that is, the first beam) to the wide beam (that is, the second beam), so that a terminal device whose moving speed is greater than or equal to the first preset threshold no longer frequently switches the beam when accessing the first network device. In this way, signal fluctuation of the terminal device is reduced, reliability of accessing the first network device by the terminal device is improved, and communication quality between the terminal device and the first network device is improved. When the second preset condition is met, in the coverage area of the first network device, there are a small quantity of terminal devices whose moving speeds are greater than or equal to the first preset threshold. The beam of the first network device may be adjusted from the wide beam (that is, the second beam) to the narrow beam (that is, the first beam), to expand the coverage area of the first network device, increase RSRP in the coverage area of the first network device, and increase a quantity of terminal devices that access the first network device.

The technical solutions in embodiments of this application may be applied to various communication systems. The communication system may be a communication system in the 3rd Generation Partnership Project (3rd generation partnership project, 3GPP), for example, a 4th generation (4th generation, 4G) mobile communication system, a long-term evolution (long-term evolution, LTE) mobile communication system, a 5th generation (5th generation, 5G) mobile communication system, new radio (new radio, NR), a system in hybrid networking of LTE and 5G, a non-terrestrial network (non-terrestrial network, NTN) system, a 6th generation (6th generation, 6G) mobile communication system or another evolved mobile communication system after 5G, a vehicle-to-everything (vehicle to everything, V2X) system, a device-to-device (device to device, D2D) communication system, a machine-to-machine (machine to machine, M2M) communication system, an internet of things (internet of things, IoT), a narrowband internet of things (narrowband internet of things, NB-IoT), another next-generation communication system, an integrated sensing communication system, or a satellite communication system. The communication system may alternatively be a non-3GPP communication system, for example, a wireless local area network (wireless local area network, WLAN) system like a wireless fidelity (wireless fidelity, Wi-Fi) system. This is not limited.

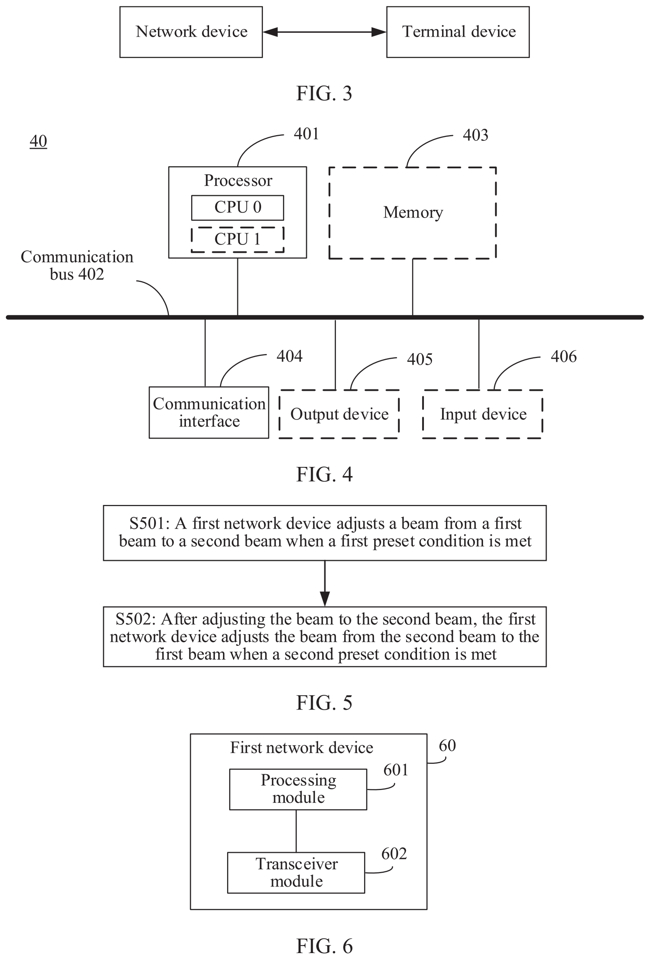

A communication system to which this application is applied may be shown in FIG. 3. The communication system may include one or more terminal devices and one or more network devices.

This application may be applied to various communication scenarios, for example, beam measurement, channel estimation, and signal detection.

The foregoing communication systems and communication scenarios to which this application is applicable are merely examples for description, communication systems and communication scenarios to which this application is applicable are not limited thereto, and the foregoing descriptions do not constitute any limitation on the solutions of this application.

The terminal device in embodiments of this application may be located in a beam/cell coverage area of the network device, and the network device may provide a communication service for the terminal device.

The terminal device in embodiments of this application may be a device having a wireless transceiver function or a chip or a chip system that may be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

Optionally, the terminal device in embodiments of this application may be a user-side device configured to implement a wireless communication function, for example, a terminal or a chip that may be used in the terminal. The terminal may be UE, a subscriber unit, an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) evolved after 5G. The access terminal may be a cellular phone, a smartphone, a cordless phone, a session initiation protocol (session initiation protocol, SIP) phone, a wireless data card, a wireless local loop (wireless local loop, WLL) station, a personal digital assistant (personal digital assistant, PDA), a handheld device (handset) with a wireless communication function, a laptop computer (laptop computer), a tablet computer, a compute device or another processing device connected to a wireless modem, a vehicle-mounted device, an uncrewed aerial vehicle, a robot, a smart point of sale (point of sale, POS) machine, a customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in smart grid (smart grid), a wireless terminal in transportation safety (transportation safety), a wireless terminal in machine-type communication (machine-type communication, MTC), a wireless terminal in smart city (smart city), a wireless terminal in smart home (smart home), or the like. Alternatively, the terminal may be a terminal having a communication function in the IoT, for example, a terminal in V2X (for example, an internet of vehicles device), a terminal in D2D communication, or a terminal in M2M communication. The terminal may be mobile or fixed.

The network device in embodiments of this application may be any device that is deployed in an access network and that can perform wireless communication with a terminal device, may be a chip or a chip system that may be disposed in the device, or may be a logical node, a logical module, or a function implemented by software, and may be configured to implement functions such as a radio physical control function, resource scheduling and radio resource management, radio access control, and mobility management. Specifically, the network device may be a device supporting wired access, or may be a device supporting wireless access.

Optionally, the network device in embodiments of this application is a device that enables a terminal device to access a wireless network. The network device may be a node in a radio access network (radio access network, RAN), or may be a base station, and may be referred to as a radio access network node (or device).

For example, the network device may include a base transceiver station (base transceiver station, BTS) in a global system for mobile communications (global system for mobile communications, GSM) or code division multiple access (code division multiple access, CDMA) network. Alternatively, the network device may include a NodeB in a wideband code division multiple access (wideband code division multiple access, WCDMA) network. Alternatively, the network device may include an evolved NodeB (NodeB or eNB or e-NodeB, evolved NodeB) in an LTE system or an LTE-advanced (LTE-advanced, LTE-A) system, for example, a conventional macro base station eNB and a micro base station eNB in a heterogeneous network scenario. Alternatively, the network device may include a next-generation NodeB (next-generation NodeB, gNB) in an NR system. Alternatively, the network device may be a network device in a future evolved PLMN. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in an NTN, to be specific, may be deployed on a flying platform or a satellite. In the NTN, the network device may serve as a layer 1 (L1) relay (relay), may serve as a base station, or may serve as an integrated access and backhaul (integrated access and backhaul, IAB) node. Alternatively, the network device may be a device that implements a base station function in IoT, for example, a device that implements a base station function in uncrewed aerial vehicle communication, V2X, D2D, or M2M. Alternatively, the network device may be a radio controller in a cloud radio access network (cloud radio access network, CRAN) scenario. Alternatively, the network device may be a wearable device or a vehicle-mounted device.

Alternatively, the network device may be a module or unit that can implement some functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

Optionally, the base station in embodiments of this application may include various forms of base stations, for example, a macro base station, a micro base station (also referred to as a small cell), a relay station, an access point, a home base station, a TRP, a transmitting point (transmitting point, TP), or a mobile switching center. This is not specifically limited in embodiments of this application.

It should be noted that the communication system described in embodiments of this application is intended to describe the technical solutions in embodiments of this application more clearly, but constitutes no limitation on the technical solutions provided in embodiments of this application. A person of ordinary skill in the art may learn of that the technical solutions provided in embodiments of this application are also applicable to a similar technical problem as a network architecture evolves and a new service scenario emerges.

In a specific implementation, as shown in FIG. 3, for example, each terminal device or each network device may use a composition structure shown in FIG. 4, or include a component shown in FIG. 4. FIG. 4 is a diagram of composition of a communication apparatus 40 according to an embodiment of this application. The communication apparatus 40 may be a terminal device or a chip or system-on-chip in the terminal device, or may be a network device or a chip or system-on-chip in the network device.

As shown in FIG. 4, the communication apparatus 40 includes one or more processors 401. Further, the communication apparatus 40 may further include a communication bus 402 and at least one communication interface (where FIG. 4 is merely an example, and an example in which the communication apparatus 40 includes a communication interface 404 and one processor 401 is used for description). Optionally, the communication apparatus 40 may further include a memory 403.

The processor 401 may be a general-purpose central processing unit (central processing unit, CPU), a microprocessor, an application-specific integrated circuit (application-specific integrated circuit, ASIC), one or more integrated circuits configured to control program execution in the solutions of this application, or a processing core configured to process data (for example, computer program instructions). The processor may be a single-core (single-CPU) processor, or may be a multi-core (multi-CPU) processor.

During specific implementation, in an embodiment, the processor 401 may include one or more CPUs, for example, a CPU 0 and a CPU 1 in FIG. 4.

The communication bus 402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 4, but this does not mean that there is only one bus or only one type of bus. The communication bus 402 is configured to connect different components in the communication apparatus 40, so that the different components in the communication apparatus 40 may communicate and interact with each other.

The communication interface 404 may be a transceiver module, and is configured to communicate with another device or a communication network. The communication network may be, for example, an Ethernet (Ethernet), a RAN, or a wireless local area network (wireless local area network, WLAN). For example, the communication interface 404 may be an apparatus like a transceiver or a transceiver machine. Alternatively, the communication interface 404 may be a transceiver circuit located in the processor 401, to implement signal input and signal output of the processor.

The memory 403 may be an apparatus having a storage function, for example, may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be accessed by a computer and that can be configured to carry or store expected program code in a form of instructions or a data structure, but is not limited thereto. The memory may exist independently, and is connected to the processor through the communication bus 402. The memory may alternatively be integrated with the processor.

For example, the memory 403 is configured to store computer-executable instructions for executing the solutions of this application, and the processor 401 controls the execution. The processor 401 is configured to execute the computer-executable instructions stored in the memory 403, to implement the methods provided in embodiments of this application.

Alternatively, optionally, in embodiments of this application, the processor 401 may perform functions related to processing in the method provided in the following embodiments in this application, and the communication interface 404 is responsible for communication with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the communication apparatus 40 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, a projector (projector), or the like. The input device 406 communicates with the processor 401, and may receive an input of a user in a plurality of manners. For example, the input device 406 may be a mouse, a keyboard, a touchscreen device, a sensing device, or the like.

It should be noted that the composition structure shown in FIG. 4 does not constitute a limitation on the communication apparatus. In addition to the components shown in FIG. 4, the communication apparatus may include more or fewer components than those shown in the figure, or combine some components, or have different component arrangements.

The following describes the communication method provided in embodiments of this application with reference to the accompanying drawings. It may be understood that, in embodiments of this application, the terminal device or the network device may perform some or all of the steps in embodiments of this application. These steps or operations are merely examples. In embodiments of this application, another operation or variations of various operations may be further performed. In addition, the steps may be performed in a sequence different from that presented in embodiments of this application, and not all the operations in embodiments of this application may be necessarily performed.

FIG. 5 is a diagram of interaction in a communication method according to this application. Refer to FIG. 5. The communication method includes the following steps.

S501: A first network device adjusts a beam from a first beam to a second beam when a first preset condition is met.

The first preset condition is that in a coverage area of the first network device, a quantity of terminal devices (which may be referred to as high-speed terminal devices or high-speed users) whose moving speeds are greater than or equal to a first preset threshold is greater than or equal to a second preset threshold. A beam type of the first beam is a narrow beam, and a beam type of the second beam is a wide beam.

Optionally, the first network device may initially configure the beam as the first beam. In the coverage area of the first network device, a terminal device (which may be referred to as a low-speed terminal device or a low-speed user) whose moving speed is less than the first preset threshold may not frequently switch the beam. Therefore, the terminal device whose moving speed is less than the first preset threshold may access the first network device based on the first beam.

Optionally, the first preset threshold and the second preset threshold may be determined based on an actual communication scenario or an actual communication requirement. This application provides several possible examples.

In an example, the first preset threshold may be 100 kilometers per hour (km/h), and the second preset threshold may be 10. When a moving speed of a terminal device is greater than or equal to 100 km/h, and a quantity of terminal devices whose moving speeds are greater than or equal to 100 km/h is greater than or equal to 10, the first network device adjusts the beam from the first beam to the second beam.

In another example, the first preset threshold may be 150 km/h. When a moving speed of a terminal device is greater than or equal to 150 km/h, and a quantity of terminal devices whose moving speeds are greater than or equal to 150 km/h is greater than or equal to the second preset threshold, the first network device adjusts the beam from the first beam to the second beam.

In conclusion, when the first preset condition is met, the first network device adjusts the beam from the first beam to the second beam, so that the terminal device whose moving speed is greater than or equal to the first preset threshold no longer frequently switches the beam, and signal fluctuation of the terminal device whose moving speed is greater than or equal to the first preset threshold is reduced. This can preferentially ensure that the terminal device whose moving speed is greater than or equal to the first preset threshold accesses the first network device, thereby improving reliability of accessing the first network device by the terminal device whose moving speed is greater than or equal to the first preset threshold, and improving communication quality between the terminal device whose moving speed is greater than or equal to the first preset threshold and the first network device.

Optionally, the first network device may determine a moving speed of a terminal device in the coverage area of the first network device based on one or two of the following parameters: a Doppler shift or a GPS speed. This application provides several possible embodiments.

In a first possible embodiment, the terminal device may send a signal to the first network device, and the first network device determines a moving speed of the terminal device based on a Doppler shift of the received signal.

In a second possible embodiment, the terminal device may determine a GPS speed of the terminal device, and then send the GPS speed to the first network device. The first network device may determine the moving speed of the terminal device based on the GPS speed.

S502: After adjusting the beam to the second beam, the first network device adjusts the beam from the second beam to the first beam when a second preset condition is met.

The second preset condition is that in the coverage area of the first network device, the quantity of terminal devices whose moving speeds are greater than or equal to the first preset threshold is less than the second preset threshold.

It may be understood that when the second preset condition is met, in the coverage area of the first network device, there are a small quantity of terminal devices whose moving speeds are greater than or equal to the first preset threshold, and the beam of the first network device may be adjusted from the second beam to the first beam, so that RSRP in the coverage area of the first network device can be improved, and a quantity of terminal devices that access the first network device can be increased. In addition, a terminal device whose moving speed is less than the first preset threshold may access the first network device without frequently switching a waveform, and may access the first network device based on the second beam.

Therefore, according to the communication method in FIG. 5, both the terminal device whose moving speed is greater than or equal to the first preset threshold and the terminal device whose moving speed is less than the first preset threshold can be considered. The terminal device whose moving speed is greater than or equal to the first preset threshold can be enabled to preferentially access the first network device, to improve user experience of the terminal device whose moving speed is greater than or equal to the first preset threshold.

According to the communication method shown in FIG. 5, when the first preset condition is met, the first network device adjusts the beam from the narrow beam (that is, the first beam) to the wide beam (that is, the second beam), so that the terminal device whose moving speed is greater than or equal to the first preset threshold no longer frequently switches the beam, and signal fluctuation of the terminal device whose moving speed is greater than or equal to the first preset threshold is reduced. In this way, reliability of accessing the first network device by the terminal device whose moving speed is greater than or equal to the first preset threshold is improved, and communication quality between the terminal device whose moving speed is greater than or equal to the first preset threshold and the first network device is improved. When the second preset condition is met, in the coverage area of the first network device, there are a small quantity of terminal devices whose moving speeds are greater than or equal to the first preset threshold, and the beam of the first network device may be adjusted from the narrow beam (the second beam) to the wide beam (the first beam), so that the coverage area of the first network device can be expanded, RSRP in the coverage area of the first network device can be increased, and a quantity of terminal devices that access the first network device can be increased.

Based on the embodiment in FIG. 5, in this embodiment of this application, a second network device may also adjust a beam. The method includes: The first network device sends first indication information to the second network device when the first preset condition is met. Correspondingly, the second network device receives the first indication information from the first network device, and adjusts the beam from a third beam to a fourth beam based on the first indication information.

The first indication information indicates the second network device to adjust the beam to the wide beam.

A beam type of the third beam is the narrow beam, and a beam type of the fourth beam is the wide beam.

Optionally, the second network device may be a network device in a neighbor cell of the first network device, and the second network device may initially configure the beam to be the third beam. In a coverage area of the second network device, a terminal device whose moving speed is less than the first preset threshold may not frequently switch the beam. Therefore, the terminal device whose moving speed is less than the first preset threshold may access the second network device based on the third beam.

It may be understood that, the first network device sends the first indication information to the second network device, so that the second network device can adjust the beam to the wide beam in advance. This avoids, as far as possible, a case in which communication quality deteriorates because the second network device does not adjust the beam to the wide beam in time due to a delay. In addition, in the coverage area of the second network device, a terminal device whose moving speed is greater than or equal to the first preset threshold no longer frequently switches the beam, so that signal fluctuation of the terminal device whose moving speed is greater than or equal to the first preset threshold is reduced, and communication performance between the terminal device whose moving speed is greater than or equal to the first preset threshold and the second network device is improved.

Correspondingly, similar to the first network device, the second network device may adjust the beam from the third beam to the fourth beam when a fifth preset condition is met.

The fifth preset condition is that in the coverage area of the second network device, a quantity of terminal devices whose moving speeds are greater than or equal to the first preset threshold is greater than or equal to the second preset threshold.

It may be understood that, when the fifth preset condition is met, the second network device adjusts the beam from the narrow beam (namely, the third beam) to the wide beam (namely, the fourth beam), so that the terminal device whose moving speed is greater than or equal to the first preset threshold may no longer frequently switch the beam, and signal fluctuation of the terminal device whose moving speed is greater than or equal to the first preset threshold is reduced. In this way, reliability of accessing the second network device by the terminal device whose moving speed is greater than or equal to the first preset threshold is improved, and communication quality between the terminal device whose moving speed is greater than or equal to the first preset threshold and the second network device is improved. In comparison with adjusting the beam based on the first indication information, the second network device adjusts the beam based on the fifth preset condition, to reduce transmission overheads, and avoid, as far as possible, a case in which the beam is always the narrow beam because the second network device receives no first indication information, so that communication reliability can be improved.

Optionally, the first network device sends second indication information to the second network device. Correspondingly, the second network device receives the second indication information from the first network device, and adjusts the beam from the fourth beam to the third beam based on the second indication information.

The second indication information indicates the second network device to adjust the beam to the narrow beam when a third preset condition is met. The third preset condition is that in the coverage area of the second network device, the quantity of terminal devices whose moving speeds are greater than or equal to the first preset threshold is less than the second preset threshold.

It may be understood that the first network device may indicate the second network device to adjust the wide beam to the narrow beam when the third preset condition is met, to expand the coverage area of the second network device, increase RSRP in the coverage area of the second network device, and increase a quantity of terminal devices that access the second network device.

Correspondingly, similar to the first network device, the second network device may adjust the beam from the fourth beam to the third beam when the third preset condition is met.

It may be understood that, when the third preset condition is met, the second network device may adjust the beam from the fourth beam to the third beam, to expand the coverage area of the second network device, increase the RSRP in the coverage area of the second network device, and increase the quantity of terminal devices that access the second network device. In comparison with that the second network device adjusts the beam based on the second indication information from the first network device, the second network device may adjust the beam based on the third preset condition, to reduce transmission overheads, and avoid, as far as possible, a case in which the beam is always the fourth beam because the second network device receives no second indication information, so that communication reliability can be improved.

Optionally, the second network device may determine a moving speed of a terminal device in the coverage area of the first network device based on one or two of the following parameters: a Doppler shift or a GPS speed.

According to the foregoing method, this application provides four possible embodiments in which the terminal device moves from the coverage area of the first network device to the coverage area of the second network device.

In a first possible embodiment, when the first preset condition is met, the first network device adjusts the beam from the first beam to the second beam, and the terminal device in the coverage area of the first network device accesses the first network device based on the second beam of the first network device. When the second preset condition is met, the first network device adjusts the beam from the second beam to the first beam. When a terminal device whose moving speed is greater than or equal to the first preset threshold leaves the coverage area of the first network device and enters the coverage area of the second network device, if a quantity of terminal devices whose moving speeds are greater than or equal to the first preset threshold is greater than or equal to the second preset threshold, the second network device adjusts the beam from the third beam to the fourth beam, and the terminal device in the coverage area of the second network accesses the second network device based on the fourth beam of the second network device. When the third preset condition is met, the second network device adjusts the beam from the fourth beam to the third beam.

In a second possible embodiment, when the first preset condition is met, the first network device adjusts the beam from the first beam to the second beam, and the terminal device in the coverage area of the first network device accesses the first network device based on the second beam of the first network device. In addition, the first network device sends the first indication information to the second network device, and the second network device may adjust the beam from the third beam to the fourth beam based on the first indication information from the first network device. When the second preset condition is met, the first network device adjusts the beam from the second beam to the first beam. When a terminal device whose moving speed is greater than or equal to the first preset threshold leaves the coverage area of the first network device and enters the coverage area of the second network device, because the second network device adjusts the beam to the fourth beam in advance, the terminal device in the coverage area of the second network device may access the second network device based on the fourth beam of the second network device. When the third preset condition is met, the second network device adjusts the beam from the fourth beam to the third beam.

In a third possible embodiment, when the first preset condition is met, the first network device adjusts the beam from the first beam to the second beam, and the terminal device in the coverage area of the first network device accesses the first network device based on the second beam of the first network device. In addition, the first network device sends the first indication information and the second indication information to the second network device, and the second network device may adjust the beam from the third beam to the fourth beam based on the first indication information from the first network device. When the second preset condition is met, the first network device adjusts the beam from the second beam to the first beam. When a terminal device whose moving speed is greater than or equal to the first preset threshold leaves the coverage area of the first network device and enters the coverage area of the second network device because the second network device adjusts the beam to the fourth beam in advance the terminal device in the coverage area of the second network device may access the second network device based on the fourth beam of the second network device. The second network device may adjust the beam from the fourth beam to the third beam based on the second indication information.

In a fourth possible embodiment, when the first preset condition is met, the first network device adjusts the beam from the first beam to the second beam, and the terminal device in the coverage area of the first network device accesses the first network device based on the second beam of the first network device. In addition, the first network device sends the second indication information to the second network device. When the second preset condition is met, the first network device adjusts the beam from the second beam to the first beam. When a terminal device whose moving speed is greater than or equal to the first preset threshold leaves the coverage area of the first network device and enters the coverage area of the second network device, if a quantity of terminal devices whose moving speeds are greater than or equal to the first preset threshold is greater than or equal to the second preset threshold, the second network device adjusts the beam from the third beam to the fourth beam, and the terminal device in the coverage area of the second network device accesses the second network device based on the fourth beam of the second network device. The second network device may adjust the beam from the fourth beam to the third beam based on the second indication information.

Based on the embodiment in FIG. 5, further, in this embodiment of this application, the first network device may adjust a waveform of the terminal device based on an MCS order of the terminal device. The method includes: The first network device determines an average MCS order corresponding to a terminal device that meets a fourth preset condition within preset time; and if the average MCS order is greater than a third preset threshold, sends first configuration information to the terminal device that meets the fourth preset condition; or if the average MCS order is less than or equal to the third preset threshold, sends second configuration information to the terminal device that meets the fourth preset condition.

The fourth preset condition is that a moving speed in the coverage area of the first network device is greater than or equal to the first preset threshold. The first configuration information indicates a CP-OFDM waveform, and the second configuration information indicates a DFT-S-OFDM waveform.

Optionally, the third preset threshold may be determined based on an actual communication scenario or an actual communication requirement.

Correspondingly, the terminal device may receive the first configuration information from the first network device, and adjust the waveform to the CP-OFDM waveform. Alternatively, the terminal device may receive the second configuration information from the first network device, and adjust the waveform to the DFT-S-OFDM waveform.

The terminal device may use the CP-OFDM waveform or the DFT-S-OFDM waveform on any beam (the wide beam or the narrow beam) to implement data transmission.

In a possible embodiment, the first network device may collect MCS orders of terminal devices whose moving speeds are greater than or equal to the first preset threshold in the coverage area of the first network device in a time period (the time period may be any time period, for example, one day or one hour), to obtain the average MCS order.

For example, MCS orders of terminal devices in the coverage area of the first network device may be input into a neural network, and the MCS orders of the terminal devices whose moving speeds are greater than or equal to the first preset threshold are calculated, to calculate a weighted average value of the MCS orders, that is, the average MCS order.

For example, the average MCS order is 4, and the third preset threshold is 6. Because the average MCS order is less than the third preset threshold, the first network device sends the first configuration information to the terminal device that meets the fourth preset condition.

For another example, the average MCS order is 8, and the third preset threshold is 6. Because the average MCS order is greater than the third preset threshold, the first network device sends the second configuration information to the terminal device that meets the fourth preset condition.

According to the foregoing method for configuring the waveform by the first network device for the terminal device, the first network device may determine the average MCS order of the terminal device whose moving speed is greater than or equal to the first preset threshold within the preset time and that is in the coverage area of the first network device. When the average MCS order is greater than the third preset threshold, the terminal device may be indicated, by using the first configuration information, to perform data transmission in the CP-OFDM waveform, so that transmit power of the terminal device can be reduced, and power consumption can be reduced. When the MCS order is less than or equal to the third preset threshold, the terminal device may be indicated, by using the second configuration information, to perform data transmission in the DFT-S-OFDM waveform, so that transmit power of the terminal device can be increased, distortion can be avoided, and communication performance can be improved. In addition, the first configuration information or the second configuration information is sent to the terminal device to fixedly configure a waveform, so that frequent waveform reconfiguration for the terminal device can be avoided as far as possible. In this way, a risk of a call drop for the terminal device can be mitigated, the terminal device is enabled to obtain optimal performance, and communication quality between the terminal device and the first network device can be improved.

Optionally, the first network device may perform, based on channel quality, waveform adaptation configuration on the terminal device whose moving speed is less than the first preset threshold in the coverage area of the first network device. The terminal device whose moving speed is less than the first preset threshold can obtain optimal communication performance by using a method of the waveform adaptation configuration, to improve communication quality between the terminal device and the first network device.

For example, at a moment 1, the first network device detects that the channel quality is good, and may indicate the terminal device whose moving speed is less than the first preset threshold to configure the CP-OFDM waveform for data transmission. At a moment 2, the first network device detects that the channel quality is poor, and may indicate the terminal device whose moving speed is less than the first preset threshold to configure the DFT-S-OFDM waveform for data transmission.

It should be noted that various embodiments of this application may be implemented separately, or may be implemented in combination. This is not limited. Unless otherwise specified or there is a logic conflict, terms and/or descriptions in different embodiments provided in this application are consistent and may be mutually referenced, and technical features in different embodiments may be combined based on an internal logical relationship thereof, to form a new embodiment.

It may be understood that an execution entity may perform some or all of the steps in embodiments of this application. The steps or operations are merely examples. In embodiments of this application, another operation or variations of various operations may be further performed. In addition, the steps may be performed in a sequence different from that presented in embodiments of this application, and not all the operations in embodiments of this application may be necessarily performed.

The foregoing mainly describes, from a perspective of interaction between devices, the solutions provided in this application. Correspondingly, this application further provides a communication apparatus, and the communication apparatus is configured to implement the foregoing methods. The communication apparatus may be the first network device in the foregoing method embodiments, an apparatus including the first network device, or a component that can be used in the first network device; or the communication apparatus may be the second network device in the foregoing method embodiments, an apparatus including the second network device, or a component that can be used in the second network device; or the communication apparatus may be the terminal device in the foregoing method embodiments, an apparatus including the terminal device, or a component that can be used in the terminal device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

In an implementation scenario, an example in which the communication apparatus is the first network device in the foregoing method embodiments is used. FIG. 6 is a diagram of a structure of a first network device 60. The first network device 60 includes a processing module 601 and a transceiver module 602.

In some embodiments, the first network device 60 may further include a storage module (not shown in FIG. 6), configured to store program instructions and data.

In some embodiments, the transceiver module 602 may also be referred to as a transceiver unit, configured to implement a sending function and/or a receiving function. The transceiver module 602 may include a transceiver circuit, a transceiver machine, a transceiver, or a communication interface.

In some embodiments, the transceiver module 602 may include a receiving module and a sending module that are respectively configured to perform the receiving and sending steps performed by the first network device in the foregoing method embodiments, and/or configured to support another process of the technology described in this specification. The processing module 601 may be configured to perform the processing (for example, determining and generation) steps performed by the first network device in the foregoing method embodiments, and/or configured to support another process of the technology described in this specification.

For example, the processing module 601 is configured to adjust a beam from a first beam to a second beam when a first preset condition is met. The first preset condition is that in a coverage area of the first network device, a quantity of terminal devices whose moving speeds are greater than or equal to a first preset threshold is greater than or equal to a second preset threshold. A beam type of the first beam is a narrow beam, and a beam type of the second beam is a wide beam. The processing module 601 is further configured to: after adjusting the beam to the second beam, adjust the beam from the second beam to the first beam when a second preset condition is met. The second preset condition is that in the coverage area of the first network device, the quantity of terminal devices whose moving speeds are greater than or equal to the first preset threshold is less than the second preset threshold.

In a possible implementation, the transceiver module 602 is configured to send first indication information to a second network device when the first preset condition is met. The first indication information indicates the second network device to adjust the beam to the wide beam.

In a possible implementation, the transceiver module 602 is further configured to send second indication information to the second network device. The second indication information indicates the second network device to adjust the beam to the narrow beam when a third preset condition is met. The third preset condition is that in a coverage area of the second network device, a quantity of terminal devices whose moving speeds are greater than or equal to the first preset threshold is less than the second preset threshold.

In a possible implementation, the processing module 601 is further configured to determine an average modulation and coding scheme MCS order corresponding to a terminal device that meets a fourth preset condition within preset time. The fourth preset condition is that a moving speed in the coverage area of the first network device is greater than or equal to the first preset threshold. The transceiver module 602 is further configured to: if the average MCS order is greater than a third preset threshold, send first configuration information to the terminal device that meets the fourth preset condition, where the first configuration information indicates a cyclic prefix-orthogonal frequency division multiplexing CP-OFDM waveform; or if the average MCS order is less than or equal to the third preset threshold, send second configuration information to the terminal device that meets the fourth preset condition, where the second configuration information indicates a discrete Fourier transform-spread-orthogonal frequency division multiplexing DFT-S-OFDM waveform.

In a possible embodiment, the processing module 601 is further configured to determine a moving speed of a terminal device in the coverage area of the first network device based on one or two of the following parameters: a Doppler shift or a GPS speed.

In this application, the first network device 60 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in hardware implementation, a person skilled in the art may figure out that the first network device 60 may be in a form of the communication apparatus 40 shown in FIG. 4.

In an example, a function/implementation process of the processing module 601 in FIG. 6 may be implemented by the processor 401 in the communication apparatus 40 shown in FIG. 4 by invoking the computer-executable instructions stored in the memory 403. A function/implementation process of the transceiver module 602 in FIG. 6 may be implemented by the communication interface 404 in the communication apparatus 40 shown in FIG. 4.

In some embodiments, when the first network device 60 in FIG. 6 is a chip or a chip system, the function/implementation process of the transceiver module 602 may be implemented by using an input/output interface (or a communication interface) of the chip or the chip system, and the function/implementation process of the processing module 601 may be implemented by a processor (or a processing circuit) of the chip or the chip system.

The first network device 60 provided in this embodiment may perform the foregoing method. Therefore, for technical effects that can be achieved by the first network device 60, refer to the foregoing method embodiments. Details are not described herein again.

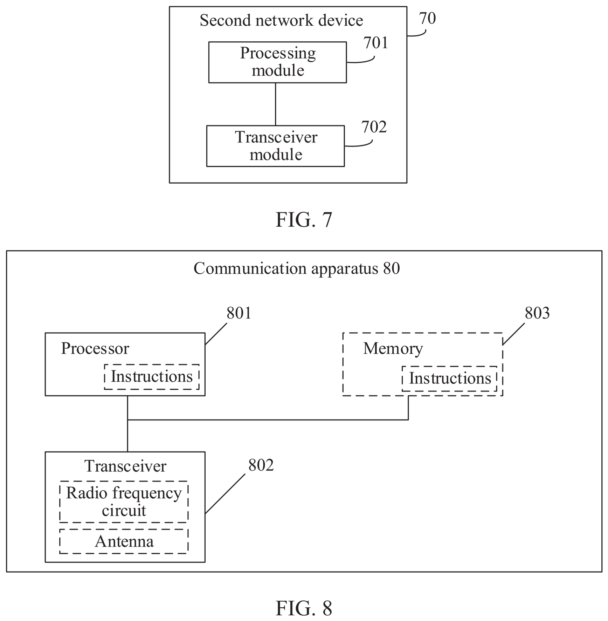

In another implementation scenario, an example in which the communication apparatus is the second network device in the foregoing method embodiments is used. FIG. 7 is a diagram of a structure of a second network device 70. The second network device 70 includes a processing module 701 and a transceiver module 702.

In some embodiments, the second network device 70 may further include a storage module (not shown in FIG. 7), configured to store program instructions and data.

In some embodiments, the transceiver module 702 may also be referred to as a transceiver unit, configured to implement a sending function and/or a receiving function. The transceiver module 702 may include a transceiver circuit, a transceiver machine, a transceiver, or a communication interface.

In some embodiments, the transceiver module 702 may include a receiving module and a sending module that are respectively configured to perform the receiving and sending steps performed by the second network device in the foregoing method embodiments, and/or configured to support another process of the technology described in this specification. The processing module 701 may be configured to perform the processing (for example, determining and generation) steps performed by the second network device in the foregoing method embodiments, and/or configured to support another process of the technology described in this specification.

For example, the transceiver module 702 is configured to receive first indication information from a first network device. The first indication information indicates the second network device to adjust a beam to a wide beam. The processing module 701 is configured to adjust the beam from a third beam to a fourth beam based on the first indication information. A beam type of the third beam is a narrow beam, and a beam type of the fourth beam is the wide beam.

In a possible implementation, the transceiver module 702 is further configured to receive second indication information from the first network device. The second indication information indicates the second network device to adjust the beam to the narrow beam when a third preset condition is met. The third preset condition is that in a coverage area of the second network device, a quantity of terminal devices whose moving speeds are greater than or equal to a first preset threshold is less than a second preset threshold. The processing module 701 is further configured to adjust the beam from the fourth beam to the third beam based on the second indication information.

In a possible implementation, the processing module 701 is further configured to adjust the beam from the fourth beam to the third beam when the third preset condition is met.

In a possible implementation, the processing module 701 is further configured to adjust the beam from the third beam to the fourth beam when a fifth preset condition is met. The fifth preset condition is that in the coverage area of the second network device, the quantity of terminal devices whose moving speeds are greater than or equal to the first preset threshold is greater than or equal to the second preset threshold.

In a possible implementation, the processing module 701 is further configured to determine a moving speed of a terminal device in a coverage area of the first network device based on one or two of the following parameters: a Doppler shift or a GPS speed.

In this application, the second network device 70 is presented in a form of functional modules obtained through division in an integrated manner. The "module" herein may be an ASIC, a circuit, a processor and a memory that execute one or more software or firmware programs, an integrated logic circuit, and/or another component that can provide the foregoing functions.

In some embodiments, in hardware implementation, a person skilled in the art may figure out that the second network device 110 may be in a form of the communication apparatus 70 shown in FIG. 7.

In an example, a function/implementation process of the processing module 701 in FIG. 7 may be implemented by the processor 401 in the communication apparatus 40 shown in FIG. 4 by invoking the computer-executable instructions stored in the memory 403. A function/implementation process of the transceiver module 702 in FIG. 7 may be implemented by the communication interface 404 in the communication apparatus 40 shown in FIG. 4.

In some embodiments, when the second network device 70 in FIG. 7 is a chip or a chip system, the function/implementation process of the transceiver module 702 may be implemented by using an input/output interface (or a communication interface) of the chip or the chip system, and the function/implementation process of the processing module 701 may be implemented by a processor (or a processing circuit) of the chip or the chip system.

The second network device 70 provided in this embodiment may perform the foregoing method. Therefore, for technical effects that can be achieved by the second network device 70, refer to the foregoing method embodiments. Details are not described herein again.

In a possible product form, the first network device or the second network device in embodiments of this application may alternatively be implemented by using one or more field programmable gate arrays (field programmable gate arrays, FPGAs), a programmable logic device (programmable logic device, PLD), a controller, a state machine, a gate logic, a discrete hardware component, any other appropriate circuit, or any combination of circuits that can perform various functions described throughout this application.

In another possible product form, the first network device or the second network device in embodiments of this application may be implemented in a general bus architecture. For ease of description, FIG. 8 is a diagram of a structure of a communication apparatus 80 according to an embodiment of this application. The communication apparatus 80 includes a processor 801 and a transceiver 802. The communication apparatus 80 may be a first network device, or a chip or a module in the first network device. Alternatively, the communication apparatus 80 may be a second network device, or a chip or a module in the second network device. FIG. 8 shows only main components of the communication apparatus 80. In addition to the processor 801 and the transceiver 802, the communication apparatus may further include a memory 803.

Optionally, the processor 801 is mainly configured to: process a communication protocol and communication data, and control the entire communication apparatus, to execute a software program and process data of the software program. The memory 803 is mainly configured to store the software program and the data. The transceiver 802 may include a radio frequency circuit and an antenna. The radio frequency circuit is mainly configured to: perform conversion between a baseband signal and a radio frequency signal, and process the radio frequency signal. The antenna is mainly configured to receive and send the radio frequency signal in an electromagnetic wave form.

Optionally, the processor 801, the transceiver 802, and the memory 803 may be connected through a communication bus.

After the communication apparatus is powered on, the processor 801 may read the software program in the memory 803, interpret and execute instructions of the software program, and process the data of the software program. When data needs to be sent in a wireless manner, the processor 801 performs baseband processing on to-be-sent data, and then outputs a baseband signal to the radio frequency circuit, and the radio frequency circuit performs radio frequency processing on the baseband signal, and then sends, through the antenna, a radio frequency signal in the electromagnetic wave form. When data is sent to the communication apparatus, the radio frequency circuit receives a radio frequency signal through the antenna, converts the radio frequency signal into a baseband signal, and outputs the baseband signal to the processor 801. The processor 801 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, an embodiment of this application further provides a communication apparatus. The communication apparatus includes a processor, configured to implement the method in any one of the foregoing method embodiments. The communication apparatus may be the first network device or the second network device in the foregoing method embodiments.

In a possible implementation, the communication apparatus further includes a memory. The memory is configured to store a necessary computer program and data. The computer program may include instructions. A processor may invoke instructions in the computer program stored in the memory, to instruct the communication apparatus to perform the method in any one of the foregoing method embodiments. Certainly, the memory may not be in the communication apparatus.

In another possible implementation, the communication apparatus further includes an interface circuit. The interface circuit is a code/data read/write interface circuit, and the interface circuit is configured to receive computer-executable instructions (where the computer-executable instructions are stored in the memory, and may be directly read from the memory, or may be read via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is the chip system, the communication apparatus may include a chip, or may include the chip and another discrete component. This is not specifically limited in embodiments of this application.

This application further provides a computer-readable storage medium. The computer-readable storage medium stores a computer program or instructions. When the computer program or the instructions are executed by a computer, a function in any one of the foregoing method embodiments is implemented.

This application further provides a computer program product. When the computer program product is executed by a computer, a function in any one of the foregoing method embodiments is implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the foregoing apparatus embodiments are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electronic, mechanical, or another form.

The units described as separate parts may be physically or not physically separated. To be specific, the units may be located in a same place or distributed on a plurality of network units. A part displayed as a unit may be or may be not a physical unit. Some or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, all or some of the embodiments may be implemented in a form of a computer program product. The computer program product includes one or more computer instructions. When computer program instructions are loaded and executed on a computer, all or some of procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of the following claims and their equivalent technologies.

## Claims

1. A communication method, comprising:
adjusting a beam from a first beam to a second beam when a first preset condition is met, wherein the first preset condition is that in a coverage area of a first network device, a quantity of terminal devices whose moving speeds are greater than or equal to a first preset threshold is greater than or equal to a second preset threshold, a beam type of the first beam is a narrow beam, and a beam type of the second beam is a wide beam; and
after adjusting the beam to the second beam, adjusting the beam from the second beam to the first beam when a second preset condition is met, wherein the second preset condition is that in the coverage area of the first network device, the quantity of terminal devices whose moving speeds are greater than or equal to the first preset threshold is less than the second preset threshold.

2. The method according to claim 1, wherein the method further comprises:
sending first indication information to a second network device when the first preset condition is met, wherein the first indication information indicates the second network device to adjust the beam to the wide beam.

3. The method according to claim 1 or 2, wherein the method further comprises:
sending second indication information to the second network device, wherein the second indication information indicates the second network device to adjust the beam to the narrow beam when a third preset condition is met, and the third preset condition is that in a coverage area of the second network device, a quantity of terminal devices whose moving speeds are greater than or equal to the first preset threshold is less than the second preset threshold.

4. The method according to any one of claims 1 to 3, wherein the method further comprises:
determining an average modulation and coding scheme MCS order corresponding to one or more terminal devices that meet a fourth preset condition within preset time, wherein the fourth preset condition is that a moving speed in the coverage area of the first network device is greater than or equal to the first preset threshold; and
if the average MCS order is greater than a third preset threshold, sending first configuration information to the one or more terminal devices that meet the fourth preset condition, wherein the first configuration information indicates a cyclic prefix-orthogonal frequency division multiplexing CP-OFDM waveform; or
if the average MCS order is less than or equal to the third preset threshold, sending second configuration information to the one or more terminal devices that meet the fourth preset condition, wherein the second configuration information indicates a discrete Fourier transform-spread-orthogonal frequency division multiplexing DFT-S-OFDM waveform.

5. The method according to any one of claims 1 to 4, wherein the method further comprises:
determining a moving speed of a terminal device in the coverage area of the first network device based on one or two of the following parameters: a Doppler shift or a global positioning system speed.

6. A communication method, comprising:
receiving first indication information from a first network device, wherein the first indication information indicates a second network device to adjust a beam to a wide beam; and
adjusting the beam from a third beam to a fourth beam based on the first indication information, wherein a beam type of the third beam is a narrow beam, and a beam type of the fourth beam is the wide beam.

7. The method according to claim 6, wherein after adjusting the beam to the fourth beam, the method comprises:
receiving second indication information from the first network device, wherein the second indication information indicates the second network device to adjust the beam to the narrow beam when a third preset condition is met, and the third preset condition is that in a coverage area of the second network device, a quantity of terminal devices whose moving speeds are greater than or equal to a first preset threshold is less than a second preset threshold; and
adjusting the beam from the fourth beam to the third beam based on the second indication information.

8. The method according to claim 6 or 7, wherein after adjusting the beam to the fourth beam, the method comprises:
adjusting the beam from the fourth beam to the third beam when the third preset condition is met.

9. The method according to claim 7 or 8, wherein the method further comprises:
adjusting the beam from the third beam to the fourth beam when a fifth preset condition is met, wherein the fifth preset condition is that in the coverage area of the second network device, the quantity of terminal devices whose moving speeds are greater than or equal to the first preset threshold is greater than or equal to the second preset threshold.

10. The method according to any one of claims 6 to 9, wherein the method further comprises:
determining a moving speed of a terminal device in a coverage area of the first network device based on one or two of the following parameters: a Doppler shift or a global positioning system speed.

11. A communication apparatus, comprising:
a processing module, configured to adjust a beam from a first beam to a second beam when a first preset condition is met, wherein the first preset condition is that in a coverage area of a first network device, a quantity of terminal devices whose moving speeds are greater than or equal to a first preset threshold is greater than or equal to a second preset threshold, a beam type of the first beam is a narrow beam, and a beam type of the second beam is a wide beam, wherein
the processing module is further configured to: after adjusting the beam to the second beam, adjust the beam from the second beam to the first beam when a second preset condition is met, wherein the second preset condition is that in the coverage area of the first network device, the quantity of terminal devices whose moving speeds are greater than or equal to the first preset threshold is less than the second preset threshold.

12. A communication apparatus, comprising:
a transceiver module, configured to receive first indication information from a first network device, wherein the first indication information indicates a second network device to adjust a beam to a wide beam; and
a processing module, configured to adjust the beam from a third beam to a fourth beam based on the first indication information, wherein a beam type of the third beam is a narrow beam, and a beam type of the fourth beam is a wide beam.

13. A communication apparatus, wherein the communication apparatus comprises a processor, and the processor is configured to cause, by running a computer program or instructions or by using a logic circuit, the communication apparatus to perform the communication method according to any one of claims 1 to 5 or perform the communication method according to any one of claims 6 to 10.

14. A computer-readable storage medium, wherein the computer-readable storage medium stores computer instructions or a program, and when the computer instructions or the program is run on a computer, a communication apparatus is caused to perform the communication method according to any one of claims 1 to 5 or perform the communication method according to any one of claims 6 to 10.

15. A computer program product, wherein the computer program product comprises computer instructions; and when a part or all of the computer instructions are run, the communication method according to any one of claims 1 to 5 or the communication method according to any one of claims 6 to 10 is performed.

16. A communication system, wherein the communication system comprises a first network device and a second network device, a transmitting end apparatus is configured to perform the communication method according to any one of claims 1 to 5, and a receiving end apparatus is configured to perform the communication method according to any one of claims 6 to 10.
